(19) Europäisches Patentamt

European Patent Office

Office européen des brevets

(11) Veröffentlichungsnummer: **0 615 477 B1**

(12) **EUROPÄISCHE PATENTSCHRIFT**

(45) Veröffentlichungstag der Patentschrift: **16.08.95**

(21) Anmeldenummer: **92923778.2**

(22) Anmeldetag: **24.11.92**

(86) Internationale Anmeldenummer:
**PCT/EP92/02700**

(87) Internationale Veröffentlichungsnummer:
**WO 93/10929 (10.06.93 93/14)**

(51) Int. Cl.⁶: **B23B 27/00**, B23B 31/02,
B23B 51/12

(54) **DREHWERKZEUG.**

(30) Priorität: **06.12.91 DE 4140301**

(43) Veröffentlichungstag der Anmeldung:
**21.09.94 Patentblatt 94/38**

(45) Bekanntmachung des Hinweises auf die
Patenterteilung:
**16.08.95 Patentblatt 95/33**

(84) Benannte Vertragsstaaten:
**AT BE CH DE DK ES FR GB IT LI NL SE**

(56) Entgegenhaltungen:
**DE-A- 3 026 513**
**DE-A- 3 725 229**

(73) Patentinhaber: **KOMET Präzisionswerkzeuge
Robert Breuning GmbH
Zeppelinstr. 3
D-74354 Besigheim (DE)**

(72) Erfinder: **MÜNDLEIN, Werner
Haselweg 11
D-74321 Bietigheim-Bissingen (DE)**
Erfinder: **SCHEER, Gerhard
Fichtenweg 6
D-74369 Löchgau (DE)**

(74) Vertreter: **Wolf, Eckhard, Dr.-Ing. et al
Patentanwälte Wolf & Lutz
Hauptmannsreute 93
D-70193 Stuttgart (DE)**

EP 0 615 477 B1

## Beschreibung

Die Erfindung betrifft ein Drehwerkzeug mit einem vorzugsweise zylindrischen Schaft und einem mit einer Anlagefläche an einer Stützfläche des Schafts anliegenden, eine auswechselbare Wendeschneidplatte tragenden Werkzeugkapf und mit einer den Werkzeugkopf mit dem Schaft verbindenden Halteschraube, wobei die Anlagefläche und die Stützfläche in spitzem Winkel zur Schaftachse angeordnet sind und ineinandergreifende Geradverzahnungen aufweisen, wobei ferner die Halteschraube im wesentlichen senkrecht zu den Stütz- und Anlageflächen ausgerichtet ist, wobei die Endeschneidplatte in einer im wesentlichen achsparallelen, vorzugsweise durch die Schaftachse verlaufenden, einen Spanraum begrenzenden ebenen Fläche versenkt angeordnet ist, und wobei die zueinander parallelen Zähne der Geradverzahnung im wesentlichen parallel zu der die Wendeschneidplatte enthaltenden Fläche verlaufen (siehe DE-C-30 26 513).

Bekannt ist es, an Drehwerkzeugen eine Trennstelle vorzusehen, um unterschiedliche Werkzeugköpfe an einem Halter anbinden zu können. Weiter ist es bekannt, die Werkzeugköpfe an der Trennstelle mittels Schrauben anzubinden, wobei meist mehrere über den Umfang verteilt angeordnete Schrauben vorgesehen werden, die beim Anziehen den Kraftschluß erzeugen. Für den Formschluß werden üblicherweise zusätzliche Formelemente, wie z.B. Zapfen, verwendet.

Weiter ist es bei einem Werkzeug zum Aufbohren und Plansenken an sich bekannt, einen Werkzeugkopf an einen Schaft über eine Geradverzahnung anzubinden (DE-30 26 513 C2).

Die zueinander parallelen Zähne der Geradverzahnung verlaufen dort parallel zur Neigungsrichtung der Stütz- und Anlageflächen. Die Verzahnung ist so angeordnet, daß über eine Längsverstellung entlang der Verzahnung eine Durchmesserveränderung der Schneide erhalten wird. Zu diesem Zweck greifen die Schrauben auf der einen Seite durch parallel zur Verzahnung langgestreckte Langlöcher hindurch, die den Verstellbereich definieren. Außerdem ist eine Exzenterschraube als Verstellelement vorgesehen.

Der Erfindung liegt die Aufgabe zugrunde, eine Trennstelle für ein Drehwerkzeug zu entwickeln, die es ermöglicht, verschiedene Grundkörper und Werkzeugköpfe miteinander zu kombinieren und die sowohl in statischer als auch dynamischer Hinsicht eine ausreichend steife Verbindung gewährleistet und trotzdem einen einfachen und schnellen Werkzeugkopfwechsel ermöglicht.

Zur Lösung dieser Aufgabe wird gemäß der Erfindung bei einem Drehwerkzeug der eingangs genannten Art vorgeschlagen, daß die zueinander parallelen Zähne der Geradverzahnung quer zur Neigungsrichtung der Stütz- und Anlageflächen verlaufen und daß die Halteschraube einen Paßschaft aufweist, mit dem sie in eine den Werkzeugkopf und den Schaft im Bereich der Anlage- und Stützflächen im wesentlichen senkrecht durchdringende Paßbohrung eingreift. Diese Ausgestaltung der Trennstelle hat den Vorteil, daß die Zähne der Geradverzahnung parallel zur Zustellrichtung der Schneide bzw. des Gesamtwerkzeugs und somit quer zur Hauptschnittkraftrichtung verlaufen.

Gemäß einer bevorzugten Ausgestaltung der Erfindung geht die die Wendeschneidplatte enthaltende achsparallele Fläche an ihrem schaftseitigen Ende in eine zur Anlagefläche im wesentlichen parallele Fläche über, wobei im Bereich dieser Fläche eine senkrechte Einsenkung für den Kopf der Halteschraube angeordnet ist, die ihrerseits in die Paßbohrung für die Halteschraube übergeht.

Die Schräge der Trennstelle und der Verzahnungswinkel werden zweckmäßig so aufeinander abgestimmt und kombiniert, daß eine der beiden Zahnflanken der Geradverzahnungen im wesentlichen parallel zu der die Wendeschneidplatte enthaltenden achsparallelen Fläche ausgerichtet ist. Um dies zu erreichen, schließen die Zahnflanken der Geradverzahnung einen Winkel von 50° bis 70°, vorzugsweise 60° miteinander ein, wahrend die Stützflächennormale mit der Schaftachse einen Winkel $\alpha$ von 15° bis 45°, vorzugsweise 30° einschließt.

Um im Bereich der Geradverzahnungen eine über die gesamte Anlagefläche ausreichende Flächenpressung zu erhalten, wird gemäß einer bevorzugten Ausgestaltung der Erfindung vorgeschlagen, daß die Anlagefläche und/oder die Stützfläche eine um eine zu den Zähnen der Geradverzahnung parallele Achse verlaufende konkave Krümmung aufweist. Der Krümmungsradius R der konkaven Krümmung wird dabei nach der Beziehung

$$R = a\, D^2 \cos^{-2}\alpha$$

gewählt, wobei D den Schaftdurchmesser, $\alpha$ den Neigungswinkel der Stützflächennormalen gegenüber der Schaftachse und a einen Parameter in der Größenordnung von 3 bis 12 mm$^{-1}$, vorzugsweise 5 bis 8 mm$^{-1}$ bedeuten. Dadurch wird erreicht, daß die gegeneinander anliegenden Anlage- und Stützflächen im unverspannten Zustand im zentralen Durchdringungsbereich der Klemmschraube einen Abstand von 10 bis 40 $\mu$m voneinander aufweisen. Ein ähnlicher Effekt kann dadurch erzielt werden, daß der Werkzeugkopf und/oder der Schaft im Bereich der von der Paßbohrung durchdrungenen Anlage- und Stützfläche eine Freisenkung aufweist. Um eine hohe Formstabilität und eine ausreichend steife Verbindung zu erzielen, sollte gemäß einer weiteren vorteilhaften Ausgestaltung der Erfindung die Tiefe der Paßausnehmung auf der Seite des Schafts dem 0,5- bis 1,5-fachen ihres Durchmessers entsprechen.

Gemäß einer weiteren bevorzugten Ausgestaltung der Erfindung ist die Paßbohrung auf der Seite des Werkzeugkopfes als quer zu den Zähnen der Geradverzahnung langgestrecktes und in Zahnrichtung Paßmaß aufweisendes Langloch ausgebildet. Durch das Langloch ergibt sich ein zusätzlicher Freiheitsgrad, der die exakte Einpassung des Werkzeugkopfes ermöglicht, ohne daß es infolge von Maßtoleranzen zu einer unerwünschten gegenseitigen Verklemmung zwischen Werkzeugkopf und Schaft kommt.

Eine weitere vorteilhafte Ausgestaltung der Erfindung sieht vor, daß die Anlage- und Stützflächen im Bereich der Geradverzahnung außerhalb der Paßbohrung von einem Kühlmittelkanal durchdrungen sind, der im Bereich der die Wendeschneidplatte oder die Einsenkung für die Halteschraube enthaltenden Fläche in den Spanraum mündet und dort in Richtung einer wirksamen Schneidkante der Wendeschneidplatte gerichtet ist und von der Schaftseite aus mit Kühlmittel beaufschlagt wird. Damit wird erreicht, daß der beim Bearbeitungsvorgang entstehende gewendelte Span im Entstehungsort mit dem Kühlmittel beaufschlagt wird und dabei aufgrund der Abkühlung in seiner Form erhalten und aus der Bohrung ausgeschwemmt wird. Die exzentrische Anordnung der Kühlmittelbohrung im Durchdringungsbereich außerhalb der Paßbohrung sorgt dafür, daß der Kühlmittelkanal nach außen hin ausreichend abgedichtet wird.

Eine vorteilhafte Weiterbildung der Erfindung sieht vor, daß zwischen Schaft und Werkzeugkopf ein Zwischenstück angeordnet ist, das an seinen zur Schaftachse schrägen Stirnflächen mit zu den Geradverzahnungen des Schafts einerseits und des Werkzeugkopfes andererseits komplementären Geradverzahnungen versehen ist, die paarweise von einer Paßbohrung für den Eingriff eines Paßschaftes einer Halteschraube durchdrungen sind. Wenn die Stirnflächen des Zwischenstücks parallel zueinander ausgerichtet sind, hat das Zwischenstück die Funktion einer Verlängerung des Paßschaftes. Wenn andererseits die Stirnflächen des Zwischenstücks um 180° um die Schaftachse gegeneinander verdreht angeordnet sind, kommt dem Zwischenstück die Funktion eines Überkopf-Adapters zu. Damit ist es möglich, mit dem gleichen Grundhalter und Werkzeugkopf ein Überkopf-Werkzeug herzustellen. Wenn dazu hin der Durchmesser der schaftseitigen Stirnfläche des Zwischenstücks größer als der Durchmesser der werkzeugkopfseitigen Stirnfläche ist, stellt das Zwischenstück einen Reduzieradapter oder einen Überkopf-Reduzieradapter dar, der es ermöglicht, an einen gegebenen Grundhalter einen Werkzeugkopf mit kleinerem Durchmesser anzuschließen.

Um das Zwischenstück trotz der vorhandenen Toleranzen exakt einpassen zu können, ist die schaftseitige Paßbohrung des Zwischenstücks als quer zu den Zähnen der Geradverzahnung langgestrecktes und in Zahnrichtung Paßmaß aufweisendes Langloch ausgebildet. Weiter kann mindestens eine der einander zugewandten, die Geradverzahnungen enthaltenden Flächen eine um eine zu den Zähnen der Geradverzahnung parallele Achse verlaufende konkave Krümmung aufweisen, die dafür sorgt, daß die Flächenpressung im Bereich des Außendurchmessers größer als im Zentrumsbereich ist, mit dem Ergebnis einer höheren Biegesteifigkeit.

Im folgenden wird die Erfindung anhand eines in der Zeichnung in schematischer Weise dargestellten Ausführungsbeispiels näher erläutert. Es zeigen

| | |
|---|---|
| Fig. 1 | eine Seitenansicht eines zweiteiligen Drehwerkzeugs mit ABS-Grundhalter (ABS ist ein Warenzeichen der Firma Komet Stahlhalter- und Werkzeugfabrik Robert Breuning GmbH); |
| Fig. 2 | eine gegenüber Fig. 1 um 90° gedrehte Ansicht eines zweiteiligen Drehwerkzeugs mit NC-Grundhalter; |
| Fig. 3 | eine Seitenansicht entsprechend Fig. 2 mit Rundschaft-Grundhalter; |
| Fig. 4a und b | einen Rundschaft in zwei um 90° gegeneinander verdrehten Seitenansichten; |
| Fig. 5a bis c | einen Werkzeugkopf in zwei um 90° gegeneinander verdrehten Seitenansichten und in Draufsicht auf die Anlagefläche; |
| Fig. 6 | eine Seitenansicht eines als Verlängerung ausgebildeten Zwischenstücks; |
| Fig. 7 | eine Seitenansicht eines als Reduzierung ausgebildeten Zwischenstücks; |
| Fig. 8 | eine Seitenansicht eines als Überkopf-Adapter ausgebildeten Zwischenstücks. |

Die in der Zeichnung dargestellten Werkzeuge sind als stehende Werkzeuge für den Einsatz in Drehmaschinen bestimmt. Sie bestehen im wesentlichen aus einem zylindrischen Schaft 10 mit einem Grundhalter 12',12'',12''' für den Anschluß an einen Drehmaschinenrevolver und einem an einer Trennstelle 14 mittels einer Paßschraube 16 am Schaft 10 lösbar befestigbaren Werkzeugkopf 18.

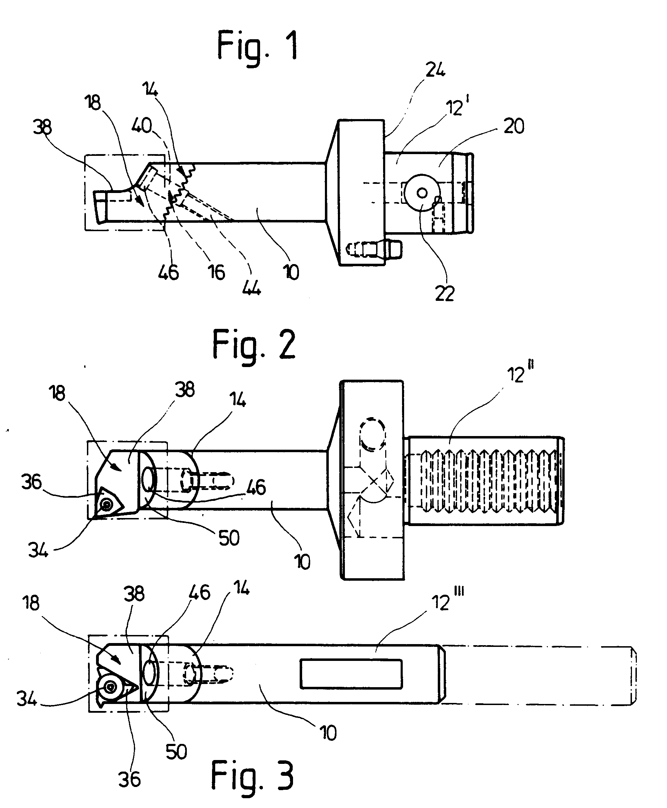

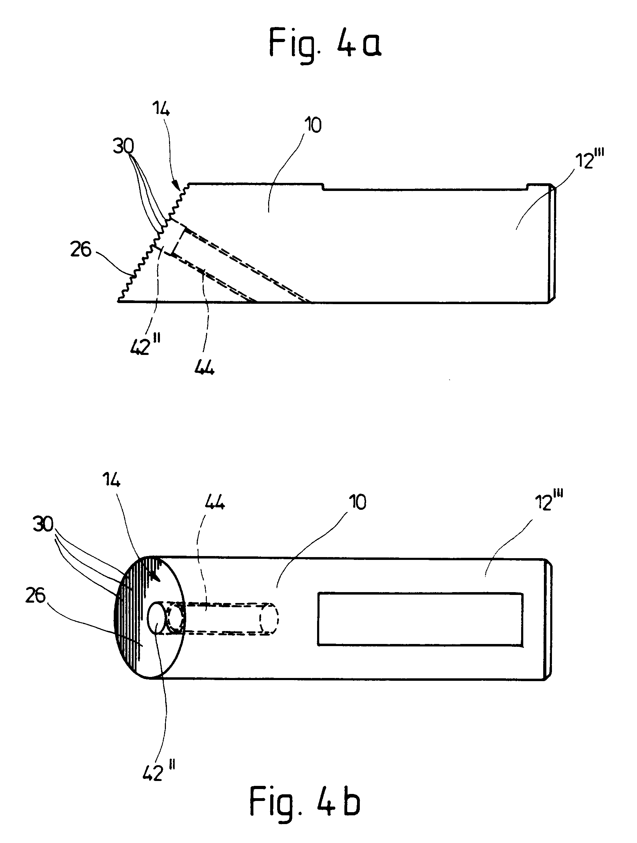

Bei dem in Fig. 1 gezeigten Ausführungsbeispiel ist der Grundhalter 12' als ABS-Kupplungsteil mit Paßzapfen 20, Pendelbolzen 22 und Planringfläche 24 ausgebildet, während in den Fig. 2 und 3 eine NC-Aufnahme 12'' bzw. ein Rundschaft 12''' als Grundhalter vorgesehen sind.

Die Trennstelle 14 weist auf der Schaftseite eine Stützfläche 26 und auf der Seite des Werkzeugkopfes eine Anlagefläche 28 auf, die mit der Schaftachse einen spitzen Winkel von etwa 30° einschließen. Die Stützfläche 26 und die Anlageflächen 28 sind außerdem mit ineinandergreifenden Geradverzahnungen 30,32 versehen, die sich über den gesamten Querschnitt des Schaftes erstrecken und deren zueinander parallelen Zähne quer zur Neigungsrichtung der Stütz- und Anlageflächen 26,28 verlaufen. Der Werkzeugkopf 18 trägt eine auswechselbare, durch eine Klemmschraube 34 gehaltene Wendeschneidplatte 36, die in einer achsparallelen, durch die Schaftachse verlaufenden, einen Spanraum begrenzenden ebenen Fläche 38 des Werkzeugkopfes 18 versenkt angeordnet ist. Die Wendeschneidplatte 36 kann am Werkzeugkopf grundsätzlich auch mit anderen Klemmmitteln befestigt werden, beispielsweise mit Klemmfingern oder einem Spannhebel. Die Zähne der Geradverzahnungen 30,32 sind parallel zu der die Wendeschneidplatte enthaltenden Fläche 38 ausgerichtet, wobei die Schräge der Trennstelle und der Verzahnungswinkel so aufeinander abgestimmt und kombiniert sind, daß eine der Zahnflanken in Zustellrichtung des Werkzeugs parallel zur Werkzeugachse und damit parallel zur Wendeschneidplatten-Fläche 38 verläuft.

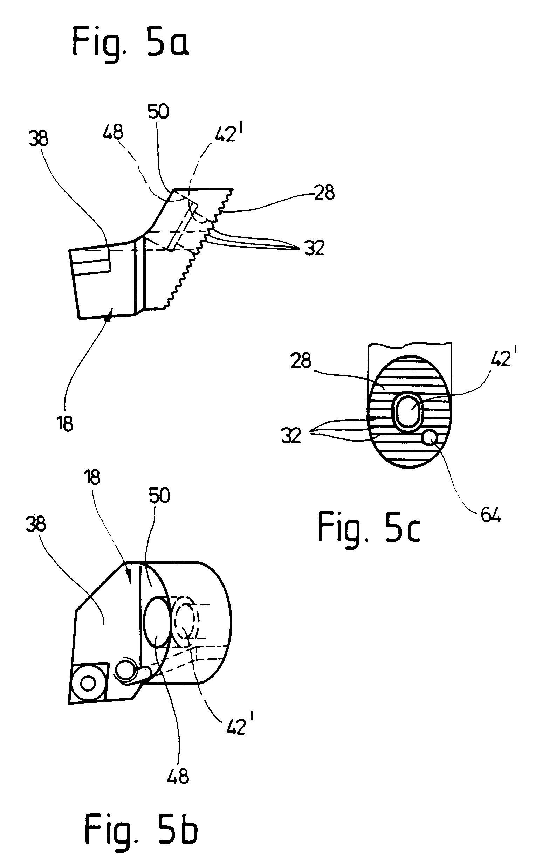

Die Paßschraube 16 greift mit ihrem Paßschaft 40 in eine die Trennstelle senkrecht durchdringende Paßbohrung 42',42'' im Werkzeugkopf 18 und im Schaft 10 ein und ist von der Seite des Werkzeugkopfes 18 in eine an die Paßbohrung 42'' anschließende Gewindebohrung 44 des Schafts 10 eingedreht. Andererseits stützt sich die Paßschraube 16 mit ihrem Kopf 46 in einer Einsenkung 48 des Werkzeugkopfes 18 ab, die im Bereich einer sich an die Wendeschneidplatten-Fläche 38 des Werkzeugkopfes anschließenden, zur Anlagefläche 28 parallelen Schrägfläche 50 des Werkzeugkopfes 18 angeordnet ist. Die Paßausnehmung 42'' auf der Schaftseite weist eine dem 0,5- bis 1-fachen des Schraubendurchmessers entsprechende Tiefe auf. Wie aus Fig. 5c zu ersehen ist, ist die Paßausnehmung 42' auf der Seite des Werkzeugkopfes 18 als quer zu den Zähnen der Geradverzahnung 32 langgestrecktes und in Zahnrichtung Paßmaß aufweisendes Langloch ausgebildet. Damit wird erreicht, daß das f-Maß, d.h. die Auskraglänge der Schneidspitze von der Achsmitte durch das Paßmaß der Paßschraube und die Spitzenhöhe, also das Maß der Schneidenspitze bezüglich einer definierten Querachse, durch die Zähne der Geradverzahnung definiert werden und damit eine exakte Einpassung des Werkzeugkopfes trotz vorhandener Toleranzen gewährleistet wird.

Um eine über die gesamte Trennstelle ausreichend steife Flächenverbindung zu erhalten, weist die Stützfläche 26 und/oder die Anlagefläche 28 eine zur Verzahnung quer verlaufende konkave Krümmung nach Art eines Innenzahnrades auf, die dafür sorgt, daß die genannten Flächen im unverspannten Zustand im Bereich der Paßschraube einen Abstand von 10 bis 30 $\mu$m aufweisen, der beim Anziehen der Paßschraube 16 durch elastische Verformung verkleinert wird. Damit wird erreicht, daß die Flächenpressung im Bereich des Außendurchmessers größer als im Zentrumsbereich ist, was sich günstig auf die Biegesteifigkeit auswirkt. Anstelle der Krümmung kann auch eine Freisenkung im zentralen Bereich um die Schraube herum vorgesehen werden. Die Geradverzahnungen 30,32 werden zweckmäßig mittels einer Profilschleifscheibe ins Volle geschliffen. Der Krümmungsradius mit dem Innenzahnradeffekt wird über die entsprechend geformte Schleifscheibe eingebracht.

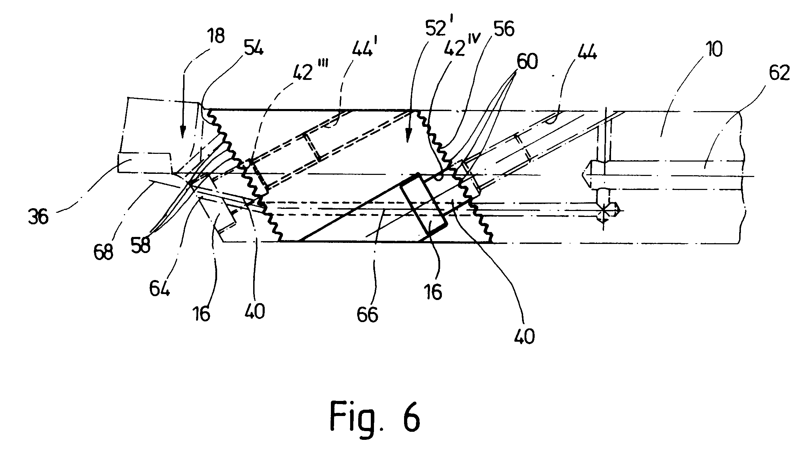

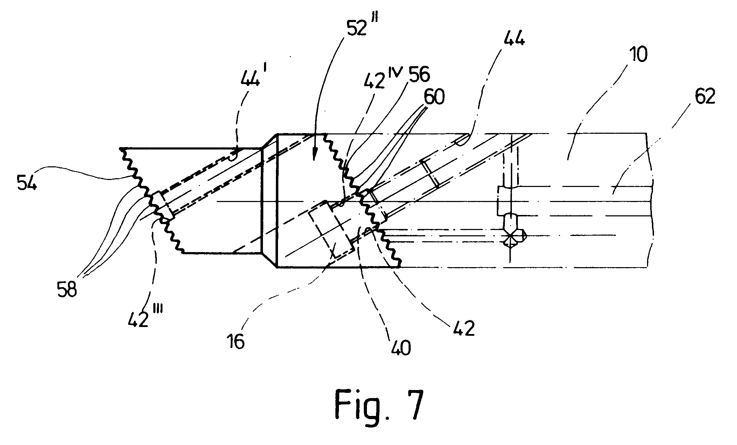

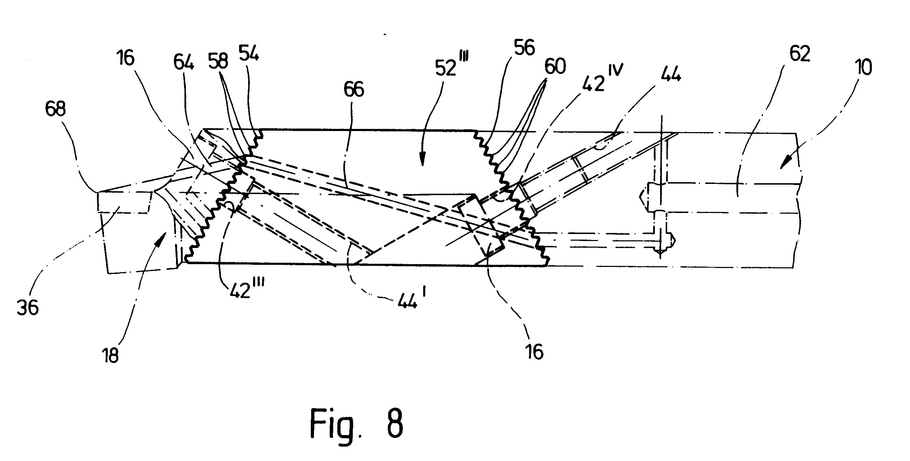

Wie aus den Fig. 6, 7 und 8 zu ersehen ist, kann zwischen dem Schaft 10 und dem Werkzeugkopf 18 ein Zwischenstück 52',52'',52''' angeordnet werden, das an seinen zur Schaftachse schrägen Stirnflächen zu den Geradverzahnungen 32,30 des Werkzeugkopfs 18 einerseits und des Schafts 10 andererseits komplementäre Geradverzahnungen 58,60 aufweist. Die einander zugewandten Geradverzahnungen 32,58 bzw. 60,30 sind paarweise von einer Paßbohrung 42',42''' bzw. 42$^{IV}$,42'' für den Eingriff von einen Paßschaft 40 aufweisenden Halteschrauben 16 durchdrungen. Die Paßschrauben sind mit ihrem Außengewinde in eine Gewindebohrung 44' des Zwischenstücks bzw. 44 des Schafts eingedreht. Das Zwischenstück 52' nach Fig. 6 ist ein Verlängerungsstück konstanten Durchmessers, das Zwischenstück 52'' nach Fig. 7 ein Reduzierstück und das Zwischenstück 52''' nach Fig. 8 ein Überkopf-Adapter.

Der Schaft 10, der Werkzeugkopf 18 und das gegebenenfalls vorhandene Zwischenstück 52',52'',52''' sind erforderlichenfalls mit einem Kühlmittelkanal 62,64,66 versehen, der die Trennstellen im Bereich der Geradverzahnungen außermittig durchsetzt und so in den durch die Flächen 38 bzw. 50 in den Spanraum mündet, daß die wirksame Schneidkante 68 der Wendeschneidplatte 36 von dem schaftseitig unter Druck zugeführten Kühlmittel angeströmt wird (vgl. Fig. 5b und 6).

Zusammenfassend ist folgendes festzustellen: Das beschriebene Ausführungsbeispiel der Erfindung zeigt ein Drehwerkzeug mit einem zylindrischen Schaft 10 und einem mit einer Anlagefläche 28 an einer Stützfläche 26 des Schafts 10 anliegenden Werkzeugkopf 18. Der Werkzeugkopf 18 ist mittels einer Paßschraube 16 mit dem Schaft 10 lösbar kraftschlüssig verbunden. Die Anlagefläche 28 und die Stützfläche 26 sind in spitzem Winkel zur Schaftachse angeordnet und weisen ineinandergreifende Geradverzahnungen 30,32 auf, die sich über den gesamten Querschnitt des Schaftes erstrecken. Die zueinander parallelen Zähne der Geradverzahnungen 30,32 sind quer zur Neigungsrichtung der Stütz- und Anlageflächen 26,28 und parallel zu einer eine Wendeschneidplatte 36 enthaltenden achsparallelen Fläche 38 des Werkzeugkopfes 18 ausgerichtet.

**Patentansprüche**

1.  Drehwerkzeug mit einem vorzugsweise zylindrischen Schaft (26) und einem mit einer Anlagefläche (28) an einer Stützfläche (26) des Schafts (10) anliegenden, eine auswechselbare Wendeschneidplatte (36) tragenden Werkzeugkopf (18) und mit einer den Werkzeugkopf (18) mit dem Schaft (10) verbindenden Halteschraube (16), wobei die Anlagefläche (28) und die Stützfläche (26) in spitzem Winkel zur Schaftachse angeordnet sind und ineinandergreifende Geradverzahnungen (30,32) aufweisen, wobei die Halteschraube (26) im wesentlichen senkrecht zu den Stütz- und Anlageflächen (26,28) ausgerichtet ist, wobei die Wendeschneidplatte (36) in einer im wesentlichen achsparallelen, vorzugsweise durch die Schaftachse verlaufenden, einen Spanraum begrenzenden ebenen Fläche (38) versenkt angeordnet ist und wobei die zueinander parallelen Zähne der Geradverzahnung (30,32) im wesentlichen parallel zu der die Wendeschneidplatte (36) enthaltenden Fläche verlaufen, **dadurch gekennzeichnet,** daß die zueinander parallelen Zähne der Geradverzahnung (30,32) quer zur Neigungsrichtung der Stütz- und Anlageflächen (26,28) verlaufen, und daß die Halteschraube (16) einen Paßschaft (40) aufweist, mit dem sie in eine den Werkzeugkopf (18) und den Schaft (10) im Bereich der Anlage- und Stützflächen (28,26) im wesentlichen senkrecht durchdringende Paßbohrung (42',42") eingreift.

2.  Drehwerkzeug nach Anspruch 1, **dadurch gekennzeichnet,** daß die die Wendeschneidplatte (36) enthaltende Fläche (38) an ihrem schaftseitigen Ende in eine zur Anlagefläche (28) im wesentlichen parallele Fläche (50) übergeht, die eine senkrechte Einsenkung (48) für den Kopf (46) der Halteschraube (16) aufweist, die ihrerseits in die Paßbohrung (42') für die Halteschraube (16) übergeht.

3.  Drehwerkzeug nach Anspruch 1 oder 2, **dadurch gekennzeichnet,** daß die Anlagefläche (28) und/oder die Stützfläche (26) eine um eine zu den Zähnen der Geradverzahnung (30,32) parallele Achse verlaufende konkave Krümmung aufweist.

4.  Drehwerkzeug nach Anspruch 3, **dadurch gekennzeichnet,** daß der Krümmungsradius (R) nach der Beziehung

    $$R = aD^2 \cos^{-2}\alpha$$

    gewählt ist, wobei D den Schaftdurchmesser, $\alpha$ den Neigungswinkel der Stützflächennormalen gegenüber der Schaftachse und a einen Parameter in der Größenordnung von 3 bis 12 $mm^{-1}$, vorzugsweise 5 bis 8 $mm^{-1}$ bedeuten.

5.  Drehwerkzeug nach einem der Ansprüche 1 bis 4, **dadurch gekennzeichnet,** daß die Tiefe der Paßausnehmung (42") auf der Seite des Schafts dem 0,5- bis 1,5-fachen ihres Durchmessers entspricht.

6.  Drehwerkzeug nach einem der Ansprüche 1 bis 5, **dadurch gekennzeichnet,** daß der Werkzeugkopf (18) und/oder der Schaft (10) im Bereich der von der Paßbohrung (42',42") durchdrungenen Anlage- und Stützfläche (28,26) eine Freisenkung aufweist.

7.  Drehwerkzeug nach einem der Ansprüche 1 bis 6, **dadurch gekennzeichnet,** daß die Stützflächennormale mit der Schaftachse einen Winkel ($\alpha$) von 15° bis 45°, vorzugsweise 30° einschließt.

8.  Drehwerkzeug nach einem der Ansprüche 1 bis 7, **dadurch gekennzeichnet,** daß die Zahnflanken der Geradverzahnungen (30,32) einen Winkel von 50° bis 70°, vorzugsweise 60°, miteinander einschließen.

9.  Drehwerkzeug nach einem der Ansprüche 1 bis 8, **dadurch gekennzeichnet,** daß eine der Zahnflanken der Geradverzahnungen (30,32) im wesentlichen parallel zu der die Wendeschneidplatte (36) enthaltenden achsparallelen Fläche (38) ausgerichtet ist.

10. Drehwerkzeug nach einem der Ansprüche 1 bis 9, **dadurch gekennzeichnet,** daß die Paßbohrung (42') auf der Seite des Werkzeugkopfes (18) als quer zu den Zähnen der Geradverzahnung (32) langgestrecktes und in Zahnrichtung Paßmaß aufweisendes Langloch ausgebildet ist.

11. Drehwerkzeug nach einem der Ansprüche 1 bis 10, **gekennzeichnet durch** einen die Anlage- und Stützflächen im Bereich der Geradverzahnung (30,32) außerhalb der Paßbohrungen (42',42'') durchdringenden, im Bereich der die Wendeschneidplatte (36) oder die Einsenkung (48) enthaltenden Fläche (38,50) in den Spanraum mündenden und dort in Richtung einer wirksamen Schneide der Wendeschneidplatte (36) gerichteten, von der Schaftseite aus mit Kühlmittel beaufschlagbaren Kühlmittelkanal (62,66,64).

12. Drehwerkzeug nach einem der Ansprüche 1 bis 11, **gekennzeichnet durch** ein zwischen Schaft (10) und Werkzeugkopf (18) angeordnetes Zwischenstück (52', 52'',52'''), das an seinen zur Schaftachse schrägen Stirnflächen (54,56) mit zu den Geradverzahnungen (30,32) des Schafts (10) einerseits und des Werkzeugkopfs (18) andererseits komplementären Geradverzahnungen (58,60) versehen ist, die paarweise von einer Paßbohrung für den Eingriff eines Paßschafts einer Halteschraube durchdrungen sind.

13. Drehwerkzeug nach Anspruch 12, **dadurch gekennzeichnet,** daß die Stirnflächen (54,56) des Zwischenstücks (52',52'') parallel zueinander ausgerichtet sind.

14. Drehwerkzeug nach Anspruch 12, **dadurch gekennzeichnet,** daß die Stirnflächen (54,56) des Zwischenstücks (52'') um 180° um die Schaftachse gegeneinander verdreht angeordnet sind.

15. Drehwerkzeug nach einem der Ansprüche 12 bis 14, **dadurch gekennzeichnet,** daß die schaftseitige Stirnfläche (56) des Zwischenstücks (52'') größer als die werkzeugkopfseitige Stirnfläche (54) ist.

16. Drehwerkzeug nach einem der Ansprüche 12 bis 15, **dadurch gekennzeichnet,** daß die schaftseitige Paßbohrung (42$^{IV}$) des Zwischenstücks (52',52'',52''') als quer zu den Zähnen der Geradverzahnung (60) langgestrecktes und in Zahnrichtung Paßmaß aufweisendes Langloch ausgebildet ist.

17. Drehwerkzeug nach einem der Ansprüche 12 bis 15, **dadurch gekennzeichnet,** daß mindestens eine der einander zugewandten, die Geradverzahnungen enthaltenden Flächen eine um eine zu den Zähnen der Geradverzahnung parallele Achse verlaufende konkave Krümmung, vorzugsweise mit einem Krümmungsradius entsprechend Anspruch 4 aufweist.

## Claims

1. A lathe tool with a preferably cylindrical shaft (26) and a tool head (18) carrying an exchangeable indexable cutting insert (36) and resting with a contact surface (28) on a support surface (26) of the shaft (10), and with a holding screw (16) connecting the tool head (18) to the shaft (10), with the contact surface (28) and the support surface (26) being arranged at an acute angle with respect to the axis of the shaft and having engaging straight tooth systems (30, 32), with furthermore the holding screw (26) being aligned essentially perpendicularly with respect to the support and contact surfaces (26, 28), and with the indexable cutting insert (36) being arranged countersunk in an essentially axially parallel flat surface (38) preferably extending through the axis of the shaft and defining a chip chamber, characterized in that the parallel teeth of the straight tooth system (30, 32) extend transversely with respect to the direction of slope of the support and contact surfaces (26, 28) and essentially parallel to the surface (38) containing the indexable cutting insert (36), and that the holding screw (16) has a fitted shaft (40) with which it extends into a fitted hole (42', 42'') extending essentially perpendicularly through the tool head (18) and the shaft (10) in the area of the contact and support surfaces (28, 26).

2. The lathe tool according to Claim 1, characterized in that the surface (38) containing the indexable cutting insert (36) transfers at its end closest to the shaft into a surface (50) which is essentially parallel with respect to the contact surface (28), which surface (50) has a perpendicularly extending depression (48) for the head (46) of the holding screw (16), which in turn transfers into the fitted hole (42') for the holding screw (16).

3. The lathe tool according to Claim 1 or 2, characterized in that the contact surface (28) and/or the support surface (26) has a concave curvature extending around an axis which is parallel with respect to the teeth of the straight tooth system (30, 32).

**4.** The lathe tool according to Claim 3, characterized in that the radius of curvature (R) is chosen according to the equation

$$R = aD^2\cos^{-2}\alpha,$$

where D is the diameter of the shaft, $\alpha$ is the angle of slope of the normal support surfaces with respect to the axis of the shaft and a is a parameter in the order of magnitude of 3 to 12 $mm^{-1}$, preferably 5 to 8 $mm^{-1}$.

**5.** The lathe tool according to one of the Claims 1 to 4, characterized in that the depth of the fitted hole (42'') at the end of the shaft corresponds with 0.5 to 1.5 times its diameter.

**6.** The lathe tool according to one of the Claims 1 to 5, characterized in that the tool head (18) and/or the shaft (10) has a free depression in the area of the contact and support surface (28, 26), through which the fitted hole (42', 42'') extends.

**7.** The lathe tool according to one of the claims 1 to 6, characterized in that the support surface normal defines an angle ($\alpha$) of 15° to 45°, preferably 30°, with the shaft axis.

**8.** The lathe tool according to one of the Claims 1 to 7, characterized in that the tooth flanks of the straight tooth systems (30, 32) define an angle of 50° to 70°, preferably 60°, with one another.

**9.** The lathe tool according to one of the Claims 1 to 8, characterized in that one of the tooth flanks of the straight tooth systems (30, 32) is aligned essentially parallel with respect to the axially parallel surface (38) containing the indexable cutting insert (36).

**10.** The lathe tool according to one of the Claims 1 to 9, characterized in that the fitted hole (42') on the side of the tool head (18) is designed as a slotted hole elongated transversely to the teeth of the straight tooth system (32) and having a tolerance on fit in the direction of the tooth.

**11.** The lathe tool according to one of the claims 1 to 10, characterized by a cooling medium channel (62, 66, 64) extending through the contact and support surfaces in the area of the straight tooth system (30, 32) outside of the fitted holes (42', 42''), terminating in the chip chamber in the area of the surface containing the indexable cutting insert (36) or the depression (48), and there directed in direction of an active cutting edge of the indexable cutting insert (36), and loadable with cooling medium from the end of the shaft.

**12.** The lathe tool according to one of the Claims 1 to 11, characterized by an intermediate piece (52', 52'', 52''') arranged between the shaft (10) and the tool head (18), which intermediate piece has on its faces (54, 56), which are sloped with respect to the axis of the shaft, straight tooth systems (58, 60) complementary to the straight tooth systems (30, 32) of the shaft (10), on the one hand, and the tool head (18), on the other hand, through which straight tooth systems, extending in pairs, are fitted holes for receiving a fitted shaft of a holding screw.

**13.** The lathe tool according to Claim 12, characterized in that the faces (54, 56) of the intermediate piece (52', 52'') are aligned parallel to one another.

**14.** The lathe tool according to Claim 12, characterized in that the faces (54, 56) of the intermediate piece (52'') are arranged rotated at 180° with respect to one another about the axis of the shaft.

**15.** The lathe tool according to one of the Claims 12 to 14, characterized in that the face (56) of the intermediate piece (52'') is larger than the face (54) on the side of the tool head.

**16.** The lathe tool according to one of the Claims 12 to 15, characterized in that the fitted hole ($42^{IV}$) of the intermediate piece (52', 52'', 52'''), which fitted hole is on the side of the shaft, is designed as a slotted hole elongated transversely to the teeth of the straight tooth system (60) and having a tolerance fit in longitudinal direction of the tooth.

**17.** The lathe tool according to one of the Claims 12 to 15, characterized in that at least one of the surfaces facing one another and containing the straight tooth systems has a concave curvature, preferably with a curvature radius corresponding to Claim 4, which curvature extends about an axis which is parallel to the teeth of the straight tooth system.

**Revendications**

**1.** Outil de tournage, comprenant une queue (26), de préférence cylindrique, une tête d'outil (18) portant une plaquette de coupe réversible (36) interchangeable, et appliquée avec une surface de contact (28) contre une surface d'appui (26) de la queue (10), et une vis d'arrêt (16) qui accouple la tête d'outil (18) avec la queue (10), la surface de contact (28) et la surface d'appui (26) étant disposées sous un angle aigu par rapport à l'axe de la queue et présentant des dentures droites (30, 32) coopérant l'une avec l'autre, la vis d'arrêt (26) étant orientée sensiblement perpendiculairement par rapport aux surfaces d'appui et de contact (26, 28), la plaquette de coupe réversible (36) étant noyée dans une surface plane (38) sensiblement parallèle à l'axe et passant de préférence par l'axe de la queue, qui délimite un espace à copeaux, et les dents parallèles de la denture droite (30, 32) s'étendant sensiblement parallèlement par rapport à la surface qui contient la plaquette de coupe réversible (36), **caractérisé en ce** que les dents parallèles de la denture droite (30, 32) s'étendent transversalement par rapport à la direction d'inclinaison des surfaces d'appui et de contact (26, 28), et que la vis d'arrêt (16) comporte une tige d'ajustage (40) avec laquelle elle s'engage dans un alésage d'ajustage (42' 42") qui traverse sensiblement verticalement la tête d'outil (18) et la queue (10) dans la région des surfaces de contact et d'appui (28, 26).

2. Outil de tournage selon la revendication 1, caractérisé en ce que la surface (38) contenant la plaquette de coupe réversible (36) se raccorde à son extrémité située du côté queue, a une surface (50) sensiblement parallèle à la surface de contact (28) laquelle comporte une creusure (48) verticale pour la tête (46) de la vis d'arrêt (16) qui se raccorde à son tour à l'alésage d'ajustage (42') pour la vis d'arrêt (16).

3. Outil de tournage selon l'une des revendications 1 ou 2, caractérisé en ce que la surface de contact (28) et/ou la surface d'appui (26) présentent une courbure concave qui s'étend autour d'un axe parallèle aux dents de la denture droite (30, 32).

4. Outil de tournage selon la revendication 3, caractérisé en ce que le rayon de courbure (R) est choisi conformément à la relation

$$R = a\,D^2\cos^{-2}\alpha,$$

où D est le diamètre de la queue, $\alpha$ l'angle d'inclinaison de la verticale à la surface d'appui par rapport à l'axe de la queue et a un paramètre de l'ordre de 3 à 12 mm$^{-1}$, de

préférence de 5 à 8 mm$^{-1}$.

5. Outil de tournage selon l'une des revendications 1 à 4, caractérisé en ce que la profondeur de l'évidement d'ajustage (42") sur le côté de la queue correspond à 0,5 à 1,5 fois son diamètre.

6. Outil de tournage selon l'une des revendications 1 à 5, caractérisé en ce que la tête d'outil (18) et/ou la queue (10) présentent un dégagement dans la région des surfaces de contact et d'appui (28, 26) traversées par l'alésage d'ajustage (42' 42").

7. Outil de tournage selon l'une des revendications 1 à 6, caractérisé en ce que la verticale à la surface d'appui forme avec l'axe de la queue un angle ($\alpha$) de 15° à 45°, de préférence de 30°.

8. Outil de tournage selon l'une des revendications 1 à 7, caractérisé en ce que les flancs des dents des dentures droites (30, 32) renferment entre eux un angle de 50° à 70°, de préférence de 60°.

9. Outil de tournage selon l'une des revendications 1 à 8, caractérisé en ce que l'un des flancs des dents des dentures droites (30, 32) est orienté sensiblement parallèlement à la surface (38) parallèle à l'axe qui contient la plaquette de coupe réversible (36).

10. Outil de tournage selon l'une des revendications 1 à 9, caractérisé en ce que l'alésage d'ajustage (42') est réalisé sur le côté de la tête d'outil (18) sous la forme d'un trou oblong allongé transversalement par rapport aux dents de la denture droite (32) et présentant la cote limite dans la direction des dents.

11. Outil de tournage selon l'une des revendications 1 à 10, caractérisé en ce qu'il comprend un canal d'écoulement de réfrigérant (62, 66, 64) traversant les surfaces de contact et d'appui (28, 26) dans la région de la denture droite (30, 32), à l'extérieur des alésages d'ajustage (42', 42"), débouchant dans la région de la surface (38, 50) contenant la plaquette de coupe réversible (36) ou la creusure (48) où il est dirigé vers une arête de coupe active de ladite plaquette de coupe réversible (36), et alimenté en réfrigérant à partir du côté de la queue.

12. Outil de tournage selon l'une des revendications 1 à 11, caractérisé en ce qu'il comprend une pièce intermédiaire (52', 52", 52"') disposée entre la queue (10) et la tête d'outil (18), dont les surfaces frontales (54, 56) inclinées par rapport à l'axe de la queue sont munies de dentures droites (58, 60) qui sont complémentaires des dentures droites (30, 32) de la queue (10) d'une part et de la tête d'outil (18) d'autre part, et qui sont traversées par paires par une tige d'ajustage pour l'engagement d'une tige d'ajustage d'une vis d'arrêt.

13. Outil de tournage selon la revendication 12, caractérisé en ce que les surfaces frontales (54, 56) de la pièce intermédiaire (52', 52") sont orientées parallèlement l'une par rapport à l'autre.

14. Outil de tournage selon la revendication 12, caractérisé en ce que les surfaces frontales (54, 56) de la pièce intermédiaire (52") sont tournées l'une par rapport à l'autre de 180° autour de l'axe de la queue.

15. Outil de tournage selon l'une des revendications 12 à 14, caractérisé en ce que la surface frontale (56) de la pièce intermédiaire (52"), située du côté queue, est plus grande que la surface frontale (54) située du côté tête d'outil.

16. Outil de tournage selon l'une des revendications 12 à 15, caractérisé en ce que l'alésage d'ajustage (42$^{IV}$) de la pièce intermédiaire (52', 52", 52'''), située du côté queue, est réalisé sous la forme d'un trou oblong allongé transversalement par rapport aux dents de la denture droite (60) et présentant la cote limite dans la direction des dents.

17. Outil de tournage selon l'une des revendications 12 à 15, caractérisé en ce qu'au moins l'une des surfaces tournées l'une vers l'autre et contenant les dentures droites présente une courbure concave qui s'étend autour d'un axe parallèle aux dents de la denture droite, de préférence avec un rayon de courbure selon la revendication 4.

# Fig. 1

# Fig. 2

# Fig. 3

# Fig. 4a

# Fig. 4b

Fig. 5a

Fig. 5c

Fig. 5b

Fig. 6

Fig. 7

Fig. 8